Europäisches Patentamt

European Patent Office

Office européen des brevets

(19)

(11) Veröffentlichungsnummer : **0 140 161**
**B1**

# (12) EUROPÄISCHE PATENTSCHRIFT

(45) Veröffentlichungstag der Patentschrift :
10.09.86

(21) Anmeldenummer : 84111480.4

(22) Anmeldetag : 26.09.84

(51) Int. Cl.⁴ : **H 02 P   8/00**

---

(54) Lastwinkelabhängige Stromregelung für Schrittmotore.

---

(30) Priorität : 29.09.83 DE 3335383

(43) Veröffentlichungstag der Anmeldung :
08.05.85 Patentblatt 85/19

(45) Bekanntmachung des Hinweises auf die Patenterteilung : 10.09.86 Patentblatt 86/37

(84) Benannte Vertragsstaaten :
BE CH DE FR GB IT LI NL SE

(56) Entgegenhaltungen :
DE-A- 2 634 502
US-A- 3 728 602
US-A- 4 119 901

(73) Patentinhaber : Siemens Aktiengesellschaft Berlin
und München
Wittelsbacherplatz 2
D-8000 München 2 (DE)

(72) Erfinder : Treffer, Gerhard, Dipl.-Ing.
Eichenstrasse 2
D-8028 Taufkirchen (DE)

**0 140 161**

## Beschreibung

Die Erfindung betrifft ein Verfahren zur Stromregelung eines Schrittmotors gemäß dem Oberbegriff des Patentanspruches 1 und eine Schaltungsanordnung zur Durchführung des Verfahrens.

Elektrische Motore, und insbesondere Schrittmotore, sind physikalisch gesehen Umformer, die eine elektrische Eingangsgröße in eine mechanische Ausgangsgröße umwandeln. Der Schrittmotor besitzt entsprechend seiner Konstruktion eine Antriebswelle oder einen Rotor, der pro Eingangsspannungsimpuls um einen genau definierten Winkel schrittweise verdreht wird. Dieser Winkel wird i. a. als Schrittwinkel bezeichnet, und ist durch den konstruktiven Aufbau des Schrittmotors festgelegt. Bei einem Schrittmotor handelt es sich also um ein diskretes Stellglied, das quantisierte Drehbewegungen ausführen kann.

Bei einer entsprechend hohen Folgefrequenz der Eingangsspannungsimpulse geht diese schrittweise Drehbewegung in einen kontinuierlichen Synchronlauf über. Eine Einführung und Übersicht über gebräuchliche Schrittmotoren ist in der Zeitschrift « Elektronik », Jan. 1967, Heft 1, Seite 1 bis 6 und Heft 2, Seite 53 bis 57, sowie in dem Aufsatz « Schrittmotoren-Aufbau, Funktionsweise und Anwendung » der Fa. Gerhard Berger GmbH + Co. in Lahr veröffentlicht.

Die Erfindung bezieht sich insbesondere auf einen zweiphasigen bzw. zweiphasig ansteuerbaren Schrittmotor mit permanentmagnetischer Erregung. Dieser Schrittmotor besitzt als Rotor einen gezahnten Permanentmagnetanker. Sein Stator besteht aus zwei Statorsystemen, entsprechend den beiden verwendeten Phasen. Jedes der beiden Statorsysteme besteht aus einem Stator-Kranz mit Zähnen bzw. Polen. Die beiden Statorsysteme sind derart angeordnet, daß bei einer Abwicklung der Stator-Kränze die Zähne des einen den Zwischenräumen des anderen gegenüberstehen.

Jedem Statorsystem ist ein magnetisierendes Wicklungssystem zugeordnet, auf Grund dessen die zugehörigen Zähne eine abwechselnde Folge von Nord- und Südpolen bilden.

Das prinzipielle Ansteuerverfahren sowie verschiedene Bauformen und verschiedene Ansteuerverfahren um einen solchen Schrittmotor in eine Drehbewegung zu versetzen, sind in dem oben erwähnten Aufsatz der Fa. Berger auf Seite 3 beschrieben.

Bei der Drehbewegung des Schrittmotors werden beispielsweise die Wicklungen der beiden Statorsysteme von Strömen wechselnder Polarität durchflossen, deren Polaritätswechsel um 90° phasenversetzt sind. Diese Art der Ansteuerung wird als bipolare Zweistrangansteuerung bezeichnet. Der Wechsel der Polarisierung der Pole eines Statorsystems bewirkt das Weiterdrehen des Rotors des Schrittmotors um einen Schritt. Der sequentielle Wechsel der Polarisierung, der abwechselnd in beiden Statorsystemen erfolgt, bewirkt die kontinuierliche Drehbewegung des Rotors.

Durch die Phasenversetzung in positiver oder negativer Richtung ist die Richtung der Drehbewegung des Schrittmotors festgelegt.

Ein Schrittmotor besitzt aber keine mechanisch wirkenden Raststellungen, sondern elektromagnetische. Eine solche Raststellung ist geometrisch beispielsweise dadurch gekennzeichnet, daß auf Grund einer entsprechenden Magnetisierung ein Nordpol des Rotors (d. h. der Zahn oder Pol, der ein permanentmagnetischer Nordpol ist) sich zwischen zwei Südpolen der Statorsysteme befindet, wobei jedes Statorsystem einen Südpol beisteuert. Für die andere Polarität gilt das Analoge. Durch die Überlagerung der magnetischen Kräfte der beiden Statorsysteme, die charakteristisch für die oben genannte bipolare Zweistrangansteuerung ist, wird der Rotor des Schrittmotors in einer stabilen Lage gehalten.

Bei der Drehbewegung des Schrittmotors ist durch die Anzahl (pro Sekunde) der durchlaufenen Raststellungen der Wert der Frequenz (d. h. der Impulsfolgefrequenz) des Schrittaktes bestimmt. Der Wert der Frequenz des Schrittaktes ist viermal so groß wie der Wert der Frequenz des Wechselstromes durch die Wicklung eines der Statorsysteme. Bei einem kontinuierlichen Synchronlauf des Schrittmotores ist die Frequenz des Schrittaktes der Drehzahl proportional.

Mit Hilfe des Lastwinkels, der eine nach DIN 42021 definierte und meßbare Größe ist, werden die Bewegungsvorgänge des Rotors eines Schrittmotors in einem ständerfesten Koordinatensystem beschrieben. Der Ständer, genauer der zweipolige Ständer, ist hierbei ein anderer Fachausdruck für die beiden Statorsysteme.

Nach DIN 42021 wird zwischen einem statischen und einem dynamischen Lastwinkel unterschieden.

Der statische Lastwinkel ist definiert als der Winkel, um den sich die Welle (und damit der Rotor) des Schrittmotors gegenüber der elektromagnetischen Raststellung unter einem statisch einwirkenden Drehmoment verdreht.

Der dynamische Lastwinkel ist definiert als der Winkel, um den der sich drehende Rotor des Schrittmotors in einem bestimmten Zeitpunkt von der durch den letzten Impuls des Schrittaktes gegebenen elektromagnetischen Raststellung entfernt ist.

Schrittmotore werden heutzutage bei vielen Geräten verwendet, um Teile in bestimmte Positionen zu bringen bzw. mit vorgegebener Geschwindigkeit zu bewegen. So werden beispielsweise bei Schreib- und Druckwerken Systeme, wie der Wagen, das Typenrad, die Schreibwalze und eine Reihe anderer Einrichtungen mit Hilfe von Schrittmotoren bewegt.

Für die Ansteuerung des Schrittmotors ergeben sich nach seiner Verwendungsart verschiedene Probleme. Wenn der Rotor entgegen einem äußeren Drehmoment in seiner elektromagnetischen

2

Rastposition gehalten werden soll, so muß der Schrittmotor mit einem Strom ausreichender Stärke versorgt werden. Wenn der Rotor und ein mitbewegtes System beschleunigt oder gleichförmig bewegt werden soll, so muß die Stärke des anliegenden Stroms und die Frequenz des Schrittmotors so gewählt werden, daß der Schrittmotor nicht aus dem Tritt fällt. Dies bedeutet, daß bei diesem Betriebszustand der dynamische Schrittlastwinkel einen bestimmten Grenzwert nicht überschreiten darf.

Es ist allgemein üblich, die Wicklungssysteme des Ständers des Schrittmotors mit einem Strom konstanter Stromstärke zu versorgen. Hierbei wird der Schrittmotor im Stillstand, während der Drehbewegung und u. U. beim Beschleunigen und beim Abbremsen mit Strömen unterschiedlicher Stromstärke versorgt, da das von der Welle des Schrittmotors abgegebene Drehmoment von den in den Wicklungssystemen fließenden Strömen abhängig ist.

Es ist bekannt, zur Ansteuerung von Schrittmotoren, einstellbare Konstantstromquellen zu verwenden (z. B. den Baustein TEA 3717 der Fa. Thomson). Diese Konstantstromquellen besitzen einen Referenzeingang, durch den der Strom durch die angeschlossene Wicklung eines Statorsystems einstellbar ist. Die Stromregelung erfolgt hierbei analog zu einem sogenannten Zweipunktstromregler, so daß dem Konstantstrom ein hochfrequenter Dreiecksstrom überlagert ist. Der hier genannte Baustein TEA 3717 enthält auch eine allgemein bekannte Transistorbrückenschaltung, an die direkt die Wicklung des Schrittmotors angeschlossen werden kann. Die Konstantstromquelle weist einen Eingang für die Schrittmotorphase auf, über den die Stromrichtung in der angeschlossenen Wicklung einstellbar ist. Weitere Einzelheiten und die äußere Beschaltung des oben genannten Bausteins sind den zugehörigen Datenblättern entnehmbar.

Beim Betrieb eines Schrittmotors wird nun der Strom durch die Wicklungen der beiden Statorsysteme in Abhängigkeit vom Wirkungsgrad des Schrittmotors, von der Größe der bewegten bzw. beschleunigten Massen, und in Abhängigkeit von der Reibung entsprechend der Geschwindigkeit der Drehbewegung gewählt. Der Konstantquellenstrom wird also in Abhängigkeit von der durch den Schrittmotor bewegten Last vor der Beschleunigung auf einen höheren Wert umgeschaltet, und nach der Verzögerung wieder reduziert. Ansteuerschaltungen, die nach diesem Verfahren arbeiten, haben einen geringen Wirkungsgrad und verursachen eine relativ hohe thermische Belastung der Konstantstromquellen, da der maximale Strom durch die Wicklungen des Schrittmotors nach den ungünstigsten Bedingungen ausgewählt wird.

Es ist daher Aufgabe der Erfindung, ein Verfahren zur Ansteuerung eines Schrittmotors mit permanentmagnetischer Erregung anzugeben, bei dem die Konstantstromquellen nur mit einem geringem Strom belastet werden.

Diese Aufgabe wird erfindungsgemäß durch die im kennzeichnenden Teil des Patentanspruches 1 angegebenen Merkmale gelöst.

Vorteilhaft ist die automatische Anpassung des Schrittmotorstromes durch das erfindungsgemäße Ansteuerverfahren während der Beschleunigungs- und Verzögerungsphasen und an sich sprunghaft ändernde Lasten.

Weiter werden durch das erfindungsgemäße Ansteuerverfahren sogenannten Lastwinkelpendelschwingungen vermieden.

Im folgenden wird das erfindungsgemäße Verfahren anhand eines in der Zeichnung dargestellten Ausführungsbeispieles erläutert. Dabei zeigen :

Figur 1   das Blockschaltbild einer Schaltungsanordnung mit einer Auswahlstufe, einer Zeitmeßanordnung und einem Sollwertgeber,

Figur 2   ein detailliertes Schaltbild der Auswahlstufe, der Zeitmeßanordnung und des Sollwertgebers,

Figur 3   Impulssequenzen auf einigen Steuerleitungen der Schaltungsanordnung und

Figur 4   Impulssequenzen auf Steuerleitungen der Zeitmeßanordnung.

Wie eingangs ausgeführt, bezieht sich das erfindungsgemäße Verfahren zur Ansteuerung eines Schrittmotors insbesondere auf einen zweiphasigen bzw. zweiphasig ansteuerbaren Schrittmotor mit permanentmagnetischer Erregung.

Jedes der beiden Statorsysteme trägt eine Wicklungsanordnung, die im folgenden abgekürzt mit Wicklung bezeichnet wird. Die Zähne bzw. die Polzahl des Stators, und damit auch des Rotors, ist für das erfindungsgemäße Verfahren von untergeordneter Bedeutung. Die Zeitspanne, die benötigt wird, um in der Wicklung die Richtung des Stromes umzukehren, wird im allgemeinen als Feldaufbauzeit bezeichnet.

Die Feldaufbauzeit der Wicklung (während dieser Kommutierungsphase) hängt ab von der Wicklungszeitkonstanten (d. h. von deren Induktivität und Widerstand), von der Versorgungsspannung, die an die Wicklung gelegt wird, von dem Strom in der Wicklung, von der Frequenz (Impulsfolgefrequenz) des Schrittaktes (d. h. von der elektromotorischen Kraft) und von dem Lastwinkel des Schrittmotors. Wird die Versorgungsspannung und der Strom in der Wicklung während der Messung der Feldaufbauzeit konstant gehalten, so ist diese nur noch von der Frequenz des Schrittaktes und dem Lastwinkel des Schrittmotors abhängig. Wenn die Versorgungsspannung wesentlich größer ist, als die elektromotorische Kraft, dann kann der Einfluß der Frequenz des Schrittaktes auf die Feldaufbauzeit vernachlässigt werden. Die Feldaufbauzeit kann dann erfindungsgemäß zur Regelung des Stromes in der Wicklung, und damit zur Stromregelung des Schrittmotores in Abhängigkeit vom Lastwinkel verwendet werden. Der Schrittakt weist hierbei eine vorgegebene Frequenz auf.

3

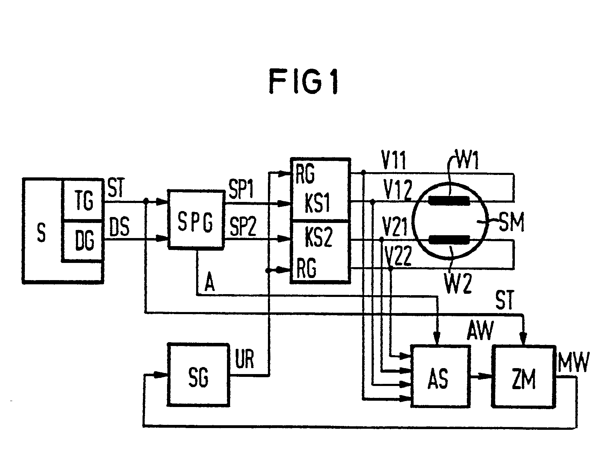

Das in Fig. 1 dargestellte Blockschaltbild enthält folgende Baustufen, eine Steuerung S mit einem Taktgeber TG und einem Drehrichtungsgeber DG, einen Schrittmotorphasengeber SPG, zwei Konstantstromquellen KS1 und KS2, einen Schrittmotor SM mit zwei Wicklungen W1 und W2, eine Auswahlstufe AS, eine Zeitmeßanordnung ZM und einen Sollwertgeber SG.

Die beiden Konstantstromquellen KS1 und KS2 sind jeweils durch den eingangs zitierten Baustein TEA 3717 der Firma Thomson realisiert. Die Konstantstromquellen KS1 und KS2 weisen einen Referenzeingang RG, und einen nicht näher bezeichneten Eingang für die Schrittmotorphase SP1 bzw. SP2 auf. Über den ersten ist die Stärke des Stromes, über den zweiten ist die Richtung des Stromes in den angeschlossenen Wicklungen W1 bzw. W2 einstellbar.

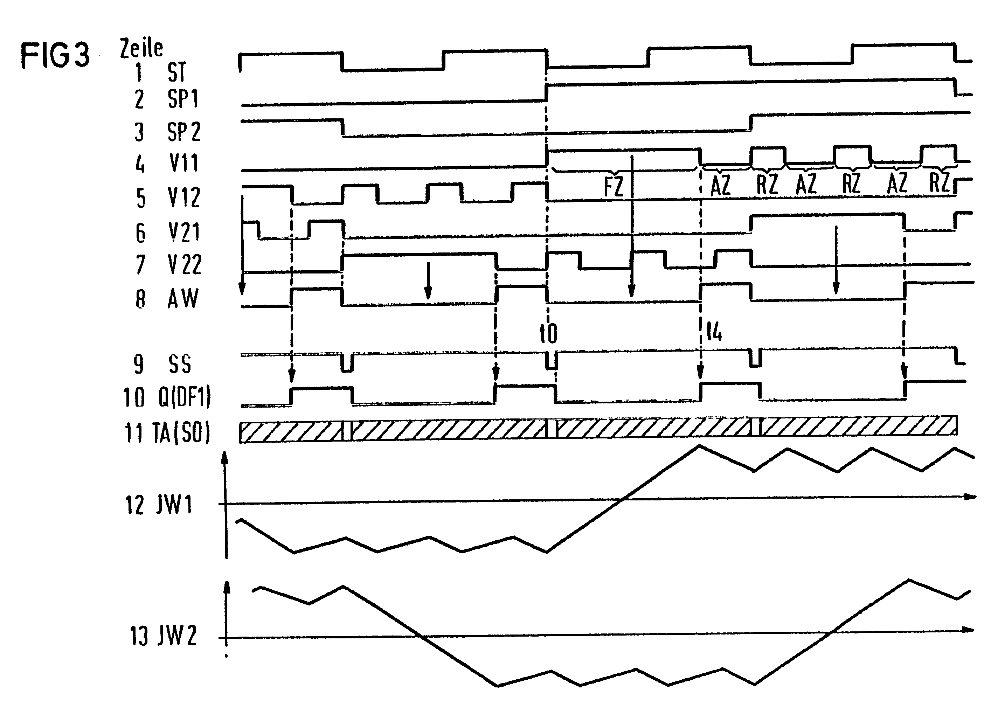

Die Konstantstromquellen geben positive Impulse zur Stromregelung ab, die auf Grund der äußeren Beschaltung (die den zugehörigen Datenblättern entnehmbar ist), durch eine konstante Auszeit AZ (siehe Fig. 3 und zugehörige Beschreibung) voneinander getrennt sind.

Der Taktgeber TG gibt einen Schrittakt an den Schrittmotorphasengeber SPG und an die Zeitmeßanordnung ZM. Der Drehrichtungsgeber DG gibt ein Drehrichtungssignal DS an den Schrittmotorphasengeber SPG, der zwei Schrittmotorphasen SP1 und SP2 an die beiden Konstantstromquellen KS1 und KS2 gibt. Die Wicklung W1 ist über zwei Versorgungsleitungen V11 und V12 mit der Konstantstromquelle KS1 verbunden. Die Wicklung W2 ist über zwei weitere Versorgungsleitungen V21 und V22 mit der Konstantstromquelle KS2 verbunden. Die Signale auf den vier Versorgungsleitungen V11, V12, V21 und V22 werden auch an die Auswahlstufe AS gegeben, an der weiter ein vom Schrittmotorphasengeber SPG ausgegebenes Auswahlsignal A anliegt. Von der Auswahlstufe AS wird ein Auswertesignal AW an die Zeitmeßanordnung ZM gegeben, die ein Meßwertsignal MW an den Sollwertgeber SG gibt. Vom Ausgang des Sollwertgebers SG wird eine Referenzspannung UR an die Referenzeingänge RG der beiden Konstantstromquellen KS1 und KS2 gegeben.

Zum besseren Verständnis sind gleichwirkende Eingänge und Ausgänge mit den gleichen Bezugszeichen versehen.

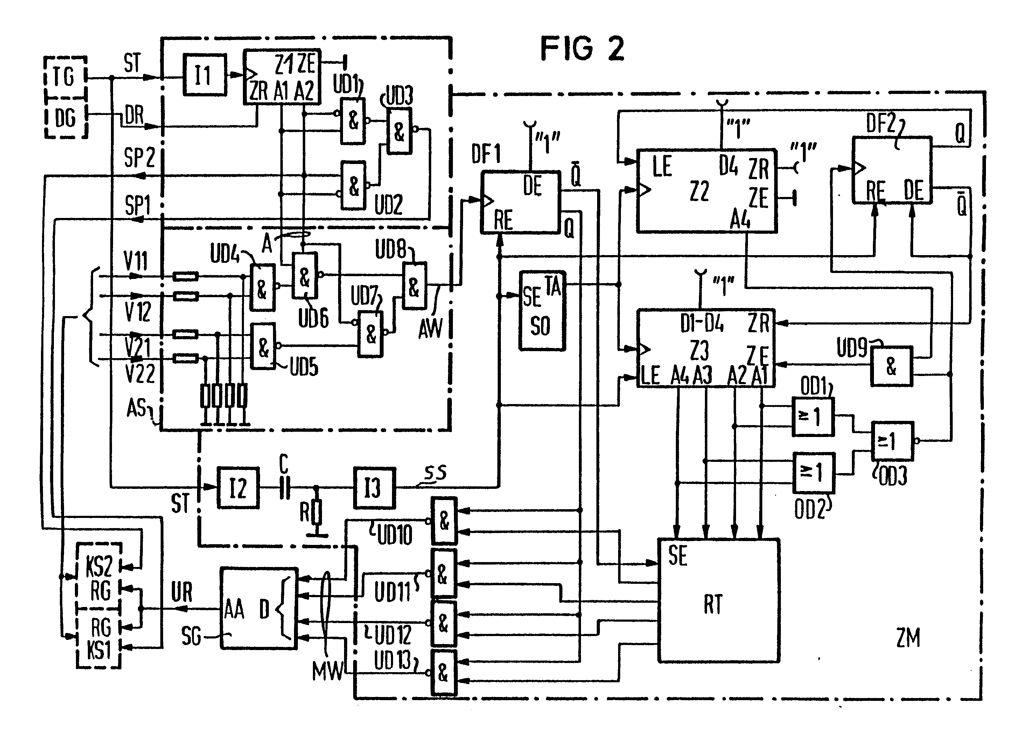

In Fig. 2 sind detailliert der Schrittmotorphasengeber SPG, die Auswahlstufe AS, die Zeitmeßanordnung ZM und der Sollwertgeber SG dargestellt.

Der Schrittmotorphasengeber SPG enthält einen Inverter I1, einen Zähler Z1 und drei invertierende UND-Verknüpfungsglieder UD1, UD2, UD3.

Die Auswahlstufe AS enthält acht nicht näher bezeichnete Widerstände, vier invertierende UND-Verknüpfungsglieder UD4, UD5, UD6, UD7 und ein UND-Verknüpfungsglied UD8.

Die Zeitmeßanordnung ZM enthält zwei Inverter I2 und I3, einen Kondensator C und einen Widerstand R, zwei sogenannte D-Flip-Flops (Verzögerungs-Flip-Flops) DF1 und DF2, zwei Zähler Z2 und Z3, einen Start-Stop-Oszillator SO, ein UND-Verknüpfungsglied UD9, zwei ODER-Verknüpfungsglieder OD1 und OD2, ein invertierendes ODER-Verknüpfungsglied OD3, ein Register RT und vier invertierende UND-Verknüpfungsglieder UD10, UD11, UD12 und UD13.

Im folgenden werden der Aufbau und die Wirkungsweise einiger der in Fig. 2 dargestellten Bausteine näher erläutert.

Die Zähler Z1 (des Schrittmotorphasengebers SPG), Z2 und Z3 (der Zeitmeßanordnung ZM), die z. B. durch den Baustein SN74 LS191 (Auf- Abzähler) der Fa. Texas Instruments realisiert sind, besitzen einen mit dem entsprechenden Symbol gekennzeichneten Takteingang (Triggerung bei positiver Flanke, Anschluß 14), Dateneingänge D1 bis D4 (Anschluß 15,1, 10,9), Ausgänge A1 bis A4 (Anschluß 3, 2, 6, 7), einen Zählrichtungseingang ZR (Anschluß 5), einen Zählbefehlseingang ZE (Anschluß 4) und einen Ladebefehlseingang LE (Anschluß 11). Die am Ausgang A1 abgegebene Wechselspannung besitzt eine Frequenz, deren Wert halb so groß ist wie der Wert der Frequenz der im Takteingang eingespeisten Rechteckspannung. An den Ausgängen A2 bis A4 wird eine Rechteckspannung mit einer Frequenz abgegeben, deren Wert gegenüber der am vorhergehenden Ausgang abgegebenen halbiert ist. Bei Anlegen eines der logischen Eins bzw. Null entsprechenden Potentials an den Zählrichtungseingang ZR, zählt der Zähler ab- bzw. aufwärts. Bei Anlegen eines der logischen Null entsprechenden Potentials an den Zählbefehlseingang ZE wird gezählt. Bei Anlegen eines der logischen Null entsprechenden Potentials an den Ladebefehlseingang LE, werden die an den Dateneingängen anliegenden Daten zu den Ausgängen A1 bis A4 durchgeschaltet.

Die D-Flip-Flops DF1 und DF2, die z. B. durch den Baustein 74LS74 der Fa. Texas Instruments (dieser Baustein enthält zwei D-Flip-Flops) realisiert sind, besitzen einen mit dem entsprechenden Symbol gekennzeichneten Takteingang (Triggerung bei positiver Flanke, Anschluß 3 bzw. 11), einen Rücksetzeingang RE (Anschluß 1 bzw. 13), einen Dateneingang DE (Anschluß 2 bzw. 12), einen Ausgang Q (Anschluß 5 bzw. 9) und einen invertierten Ausgang Q̄ (Anschluß 6 bzw. 8).

Der Start-Stop-Oszillator SO, der durch den Baustein TDB 0555 der Fa. Texas Instruments realisiert sein kann, besitzt einen Schalteingang SE (Anschluß 4) und einen Taktausgang TA (Anschluß 3). Solange am Schalteingang SE des Start-Stop-Oszillators SO ein der logischen Eins entsprechendes Potential anliegt, wird vom Taktausgang TA eine Impulsfolge mit konstanter Frequenz abgegeben. Die externe Beschaltung dieses Bausteines ist den zugehörigen Datenblättern zu entnehmen.

Das Register RT wird z. B. durch den Baustein 74LS75 der Fa. Texas Instruments, realisiert. Das Register RT besitzt nicht näher bezeichnete Eingänge (Anschluß 2, 3, 6 und 7), sonicht näher bezeichnete Ausgänge (Anschluß 9, 10, 15 und 16), sowie einen Schalteingang SE (Anschluß 4 und 13). Bei Anlegen eines der logischen Eins entsprechenden Potentials an den Schalteingang SE des Registers RT, werden die an den Eingängen anliegenden Daten zu den Ausgängen durchgeschaltet. Solange anschließend am Schalteingang SE des Registers RT ein der logischen Null entsprechendes Potential anliegt, können die Daten dort abgegriffen werden.

Der Sollwertgeber SG, der ein handelsüblicher Digital-Analogwandler ist, besitzt Digitaleingänge D und einen Analogausgang AA. Die an den Digitaleingängen D anliegenden Daten werden in eine am Analogausgang AA abgreifbare Referenzspannung UR umgewandelt.

Die in Fig. 2 dargestellten Bausteine sind folgendermaßen zusammengeschaltet.

Der vom Taktgeber TG an den Schrittmotorphasengeber SPG gegebene Schrittakt ST liegt über dem Inverter I1 am Takteingang des Zählers Z1 an. Der Zählbefehlseingang ZE des Zählers Z1 liegt an einem der logischen Null entsprechenden Potential. Das vom Drehrichtungsgeber DG abgegebene Drehrichtungssignal DR liegt am Zählrichtungseingang ZR des Zählers Z1 an. Der Ausgang A1 des Zählers Z1 ist mit einem Eingang des invertierenden UND Verknüpfungsgliedes UD1 und mit einem invertierenden Eingang des invertierenden UND-Verknüpfungsgliedes UD2 verbunden. Der Ausgang A2 des Zählers Z1 ist mit dem anderen invertierenden Eingang des invertierenden UND-Verknüpfungsgliedes UD1 und mit dem anderen Eingang des invertierenden UND-Verknüpfungsgliedes UD2 verbunden. Die Ausgänge der invertierenden UND-Verknüpfungsglieder UD1 und UD2 sind mit den beiden Eingängen des invertierenden UND-Verknüpfungsgliedes UD3 verbunden, von dessen Ausgang die Schrittmotorphase SP1 abgegeben wird. Vom Ausgang A2 des Zählers Z1 wird die Schrittmotorphase SP2 abgegeben. Von den Ausgängen A1 und A2 des Zählers Z1 wird das Auswahlsignal A abgegeben.

Über nicht näher bezeichnete Widerstände der Auswahlstufe AS, von denen jeweils zwei einen Spannungsteiler zur Pegelanpassung bilden, liegen die Versorgungsleitungen V11, V12, V21 und V22 in dieser Reihenfolge an den Eingängen der beiden invertierenden UND-Verknüpfungsglieder UD4 und UD5 an. Der Ausgang des invertierenden UND-Verknüpfungsgliedes UD4 ist mit einem Eingang des invertierenden UND-Verknüpfungsgliedes UD6 verbunden. Der Ausgang des invertierenden UND-Verknüpfungsgliedes UD5 ist mit einem Eingang des invertierenden UND-Verknüpfungsgliedes UD7 verbunden. Am anderen Eingang des invertierenden UND-Verknüpfungsgliedes UD6 liegt der Ausgang A1 des Zählers Z1, am anderen invertierenden Eingang des invertierenden UND-Verknüpfungsgliedes UD7 liegt der Ausgang A2 des Zählers Z1 an. Die Ausgänge der invertierenden UND-Verknüpfungsglieder UD6 und UD7 sind mit den beiden Eingängen des UND-Verknüpfungsgliedes UD8 verbunden, an dessen Ausgang das Auswertesignal AW abgegeben wird.

Aus dem vom Taktgeber TG an die Zeitmeßanordnung ZM abgegebenen Schrittakt ST wird über einen Inverter I2, eine aus dem Kondensator C und dem Widerstand R gebildete Differenzierstufe und über den Inverter I3 ein Start-Stop-Signal SS gebildet und an den Ladebefehlseingang LE des Zählers Z3, an den Schalteingang SE des Start-Stop-Oszillators SO und an die Rücksetzeingänge RE der beiden D-Flip-Flops DF1 und DF2 gegeben. Der Taktausgang TA des Start-Stop-Oszillators SO ist mit den beiden Takteingängen der Zähler Z2 und Z3 verbunden. Der Dateneingang DE des D-Flip-Flops DF1 liegt auf einem der logischen Eins entsprechenden Potential. Der Ausgang Q des D-Flip-Flops DF1 ist mit jeweils einem Eingang der invertierenden UND-Verknüpfungsglieder UD10 bis UD13 verbunden. Der invertierte Ausgang Q̄ des D-Flip-Flops DF1 ist mit dem Schalteingang SE des Registers RT verbunden. Die Dateneingänge D1 bis D4 des Zählers Z3 und der Dateneingang D4 des Zählers Z2 sind mit einem der logischen Eins entsprechenden Potential verbunden. Die Ausgänge A1 bis A4 des Zählers Z3 sind in dieser Reihenfolge jeweils mit den beiden Eingängen der beiden ODER-Verknüpfungsglieder OD1 und OD2 verbunden, deren Ausgänge an den beiden Eingängen des invertierenden ODER-Verknüpfungsgliedes OD3 anliegen. Der Ausgang des invertierenden ODER-Verknüpfungsgliedes OD3 ist mit einem Eingang des UND-Verknüpfungsgliedes UD9 und mit dem Takteingang des D-Flip-Flops DF2 verbunden. Der Ausgang A4 des Zählers Z2 ist mit dem anderen Eingang des UND-Verknüpfungsgliedes UD9 verbunden, dessen Ausgang mit dem Zählbefehlseingang ZE des Zählers Z3 verbunden ist. Der invertierte Ausgang Q̄ des D-Flip-Flops DF2 ist mit dem Dateneingang DE des D-Flip-Flops DF2 und mit dem Zählrichtungseingang ZR des Zählers Z3 verbunden. Der Ausgang Q des D-Flip-Flops DF2 ist mit dem Ladebefehlseingang LE des Zählers Z2 verbunden. Die Ausgänge A1 bis A4 des Zählers Z3 liegen auch an den Eingängen des Registers RT an, dessen Ausgänge mit den anderen Eingängen der invertierenden UND-Verknüpfungsglieder UD10 bis UD13 verbunden sind. Die Ausgänge der invertierenden UND-Verknüpfungsglieder UD10 bis UD13, an denen ein Meßwertsignal MW abgreifbar ist, sind mit den Digitaleingängen D des Sollwertgebers SG verbunden. Vom Analogausgang AA des Sollwertgebers SG wird die Referenzspannung UR an die beiden Konstantstromquellen KS1 und KS2 gegeben.

In Fig. 3 sind Impulssequenzen auf einigen Steuerleitungen bzw. Signalzustände an einigen Baustufen der Schaltungsanordnung dargestellt. Dies sind im einzelnen in Zeile 1 der vom Taktgeber TG abgegebene Schrittakt ST, in den Zeilen 2 und 3 die vom Schrittmotorphasengeber SPG abgegebenen Schrittmotorphasen SP1 und SP2, in den Zeilen 4 bis 7 die von den Konstantstromquellen KS1 und KS2 abgegebenen Signale auf den Versorgungsleitungen V11, V12, V21 und V22, in Zeile 8 das von der Auswahlstufe AS abgegebene Auswertesignal AW, in Zeile 9 das in der Zeitmeßanordnung ZM gebildete Start-Stop-Signal SS, in Zeile 10 das vom Ausgang Q des D-Flip-Flops DF1 abgegebene Signal, in Zeile 11 das vom Taktausgang TA des Start-Stop-Oszillators SO abgegebene Signal, und in den Zeilen 12 und 13 die in den Wicklungen W1 und W2 des Schrittmotors SM auftretenden Motorströme IW1 und IW2.

Der Schrittakt ST (Zeile 1) ist eine periodische Rechteckspannung.

Die Schrittmotorphasen SP1 und SP2 (Zeile 2 und 3) sind periodische Rechteckspannungen, die gegeneinander um 90° phasenversetzt sind. Dabei ist der Wert der Frequenz des Schrittaktes ST viermal so groß wie der Wert der Frequenz der Schrittmotorphase SP1 bzw. SP2.

Auf den Versorgungsleitungen V11, V12, V21 und V22 (Zeilen 4 bis 7) ist hier beispielsweise jeweils eine Folge von vier positiven Impulsen dargestellt. Der führende Impuls besitzt eine Impulsbreite, die der Feldaufbauzeit FZ entspricht. Die drei nachfolgenden Impulse besitzen eine Impulsbreite, die jeweils einer Regelzeit RZ entsprechen. Die Impulse sind jeweils durch die Auszeit AZ voneinander getrennt. Die Impulsfolgen auf den Versorgungsleitungen V11 und V12, sowie auf den Versorgungsleitungen V21 und V22 sind jeweils gegeneinander um 180° phasenversetzt. Die Impulsfolgen auf den Versorgungsleitungen V11 und V21 bzw. V12 und V22 sind jeweils gegeneinander um 90° phasenversetzt. Die Entstehung der Impulsfolgen wird später in der Funktionsbeschreibung erläutert.

Das Auswertesignal AW (Zeile 8) besteht aus einer Impulsfolge von negativen Impulsen. Das von der Auswahlstufe AS abgegebene Auswertesignal AW entsteht dadurch, daß jeweils während der Dauer eines Rechteckimpulses des Schrittaktes, beginnend mit dessen abfallender Flanke, nacheinander die Signale auf den Versorgungsleitungen V12 (Zeile 5), V22 (Zeile 7), V11 (Zeile 4) und V21 (Zeile 6), invertiert durchgeschaltet werden. (In Fig. 3 ist dies jeweils der Impuls mit einer der Feldaufbauzeit FZ entsprechenden Impulsbreite).

Das Start-Stop-Signal SS (Zeile 9) besteht aus einer Folge von kurzen negativen Impulsen, deren Impulsbreite durch das aus dem Widerstand R und dem Kondensator C bestehenden Differenzierglied in der Zeitmeßanordnung ZM bestimmt ist.

Das am Ausgang Q des D-Flip-Flops DF1 (Zeile 10) abgegebene Signal besteht aus einer Folge von positiven Impulsen.

Das am Taktausgang TA des Start-Stop-Oszillators SO abgegebene Signal besteht aus einer hochfrequenten Impulsfolge, die während der Zeiten, zu denen das Start-Stop-Signal SS (Zeile 9) einen negativen Impuls besitzt, unterbrochen ist. Die hochfrequente Impulsfolge ist in der Figur 3 symbolisch durch eine Schraffur gekennzeichnet.

Die Motorströme IW1 und IW2 (Zeile 12 und 13) bestehen aus trapezförmigen Impulsen mit wechselnder Polarität. Diesen Impulsen ist ein hochfrequenter Dreiecksstrom überlagert. Die hochfrequente Dreiecksspannung, und auch der Polaritätswechsel der Motorströme IW1 und IW2 werden in an sich bekannter Weise durch die auf den Versorgungsleitungen V11 bis V22 liegenden Impulse verursacht. Die Motorströme IW1 und IW2 sind gegeneinander um 90° phasenversetzt. Die Frequenzform der Motorströme IW1 und IW2, sowie deren Überlagerung sind zur Verdeutlichung übertrieben dargestellt.

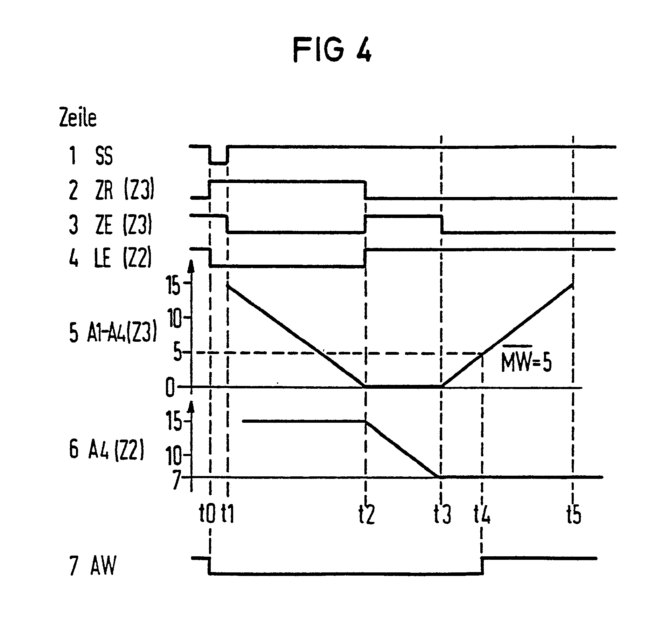

In Fig. 4 sind Impulssequenzen auf einigen der Steuerleitungen bzw. Signalzustände an einigen Bausteinen der Zeitmeßanordnung ZM dargestellt. Dies sind im einzelnen in Zeile 1 das Start-Stop-Signal SS, in Zeile 2 der Signalzustand am Zählrichtungseingang ZR des Zählers Z3, in Zeile 3 der Signalzustand am Zählbefehlseingang ZE des Zählers Z3, in Zeile 4 der Signalzustand am Ladebefehlseingang LE des Zählers Z2, in Zeile 5 symbolisch der Signalzustand an den Ausgängen A1 bis A4 des Zählers Z3, in Zeile 6 symbolisch der Signalzustand am Ausgang A4 des Zählers Z2, und in Zeile 7 das Auswertesignal AW. Symbolische Darstellung bedeutet hier, daß der, dem Signalzustand entsprechende Zahlenwert dargestellt ist.

Der Abbildungsmaßstab in Fig. 4 wurde gegenüber dem in Fig. 3 vergrößert. Der Signalverlauf wird im folgenden bei der Funktionsbeschreibung erläutert, wobei auch auf Fig. 2 und 3 verwiesen wird.

Der Schrittmotorphasengeber SPG (Fig. 2) bildet auf Grund des vom Taktgeber TG abgegebenen Schrittaktes ST und des vom Drehrichtungsgeber DG abgegebenen Drehrichtungssignals DR die beiden Schrittmotorphasen SP1 und SP2 und das Auswahlsignal A. Das Drehrichtungssignal DR bestimmt hierbei, ob die Schrittmotorphase SP2 gegenüber der Schrittmotorphase SP1 um 90° nach links oder nach rechts phasenversetzt ist. Die Wirkungsweise der einzelnen Bausteine des Schrittmotorphasengebers SPG läßt sich aus Fig. 2 und der dazugehörigen Beschreibung entnehmen und bedarf keiner weiteren Erklärung.

Im folgenden wird ein Meßzyklus beschrieben, der zum Zeitpunkt t0 (s. Fig. 3 und 4) beginnt. Es wird darauf hingewiesen, daß die in den Fig. 3 und 4 dargestellten Impulssequenzen idealisiert sind.

Die Zeitmeßanordnung ZM bildet aus der abfallenden Flanke des Schrittaktes ST zum Zeitpunkt t0 über die Inverter I2 und I3 und das zwischengeschaltete Differenzierglied C, RH das Start-Stop-Signal SS, welches beginnend mit dem Zeitpunkt t0 bis zu einem Zeitpunkt t1 einen negativen Impuls aufweist, dessen Dauer durch das Differenzierglied bestimmt ist. Mit der ansteigenden Flanke des Start-Stop-Signals SS zum Zeitpunkt t1 gibt der Taktausgang TA des Start-Stop-Oszillators SO eine Impulsfolge ab, und der Ausgang Q des D-Flip-Flops DF1 gibt ein der logischen Null entsprechendes Potential ab, auf Grund dessen die invertierenden UND-Verknüpfungsglieder UD10 bis UD13 jeweils ein der logischen Eins entsprechendes Potential als Meßwertsignal MW an den Sollwertgeber SG abgeben. Dieser gibt daraufhin an seinem Analogausgang AA eine Referenzspannung UR ab, durch die in den Konstantstromquellen KS1 und KS2 der kleinste Strom eingestellt wird.

Weiter wird mit dem Start-Stop-Signal SS zum Zeitpunkt t0 bzw. t1 an den Zählrichtungseingang ZR des Zählers Z3 (Fig. 4, Zeile 2) ein der logischen Eins entsprechendes Potential (vom Ausgang Q̄ des D-Flip-Flops DF2) und an den Ladebefehlseingang LE des Zählers Z2 (Fig. 4, Zeile 4) ein der logischen Null entsprechendes Potential (vom Ausgang Q des D-Flip-Flops DF2) gelegt. Da zum Zeitpunkt t1 an den Ladebefehlseingängen LE der Zähler Z2 und Z3 ein der logischen Null entsprechendes Potential liegt, und die Dateneingänge D1 bis D4 des Zählers Z3 bzw. D4 des Zählers Z2 auf einem der logischen Eins entsprechenden Potential liegen, ist zum Zeitpunkt t1 an den Ausgängen A1 bis A4 des Zählers Z3 ein der logischen Eins entsprechendes Potential abgreifbar. Aus diesem Grund gibt das invertierende ODER-Verknüpfungsglied OD3 ein der logischen Null entsprechendes Potential ab, so daß am Zählbefehlseingang ZE des Zählers Z3 (Fig. 4, Zeile 3) über das UND-Verknüpfungsglied UD9 ein der logischen Null entsprechendes Potential anliegt.

Zum Zeitpunkt t1 ist der Zähler Z3 also zum Abwärtszählen ab der Zahl 15 (dies ist die an den Ausgängen A1 bis A4 des Zählers Z3 abgreifbare binäre Zahl) eingestellt.

Zum Zeitpunkt t0 wird von der Auswahlstufe AS der auf der Versorgungsleitung V11 (Fig. 3, Zeile 4) liegende Impuls mit der, der Feldaufbauzeit FZ entsprechenden Impulsbreite als Auswertesignal AW auf Grund des entsprechenden, vom Schrittmotorphasengeber SPG abgegebenen Auswahlsignals A zur Zeitmeßanordnung ZM durchgeschaltet. Die Funktionsweise der Auswahlstufe AS ist der Schaltungsbeschreibung zu Fig. 2 zu entnehmen.

Ab dem Zeitpunkt t0 liegt also am Takteingang des D-Flip-Flops DF1 das Auswertesignal AW (Fig. 3, Zeile 8 und Fig. 4, Zeile 7) an, das ein der logischen Null entsprechendes Potential aufweist.

Zu einem Zeitpunkt t2 ist an den Ausgängen A1 bis A4 des abwärts zählenden Zählers Z3 die binäre Zahl Null abgreifbar. Das invertierende ODER-Verknüpfungsglied OD3 gibt dann ein der logischen Eins entsprechendes Potential ab, welches am Takteingang des D-Flip-Flops DF2 und am einen Eingang des UND-Verknüpfungsgliedes UD9 anliegt. Als Folge hiervon wird an den Zählrichtungseingang ZR des Zählers Z3 (Fig. 4, Zeile 2) ein der logischen Null entsprechendes Potential gelegt. An den Ladebefehlseingang LE des Zählers Z2 (Fig. 4, Zeile 4) wird gleichzeitig ein der logischen Eins entsprechendes Potential gelegt. Da zum Zeitpunkt t2 vom Ausgang A4 des Zählers Z2 immer noch ein der logischen Eins entsprechendes Potential abgegeben wird (dies entspricht der in Fig. 4, Zeile 6 dargestellten Zahl 15), wird ab diesem Zeitpunkt t2 an den Zählbefehlseingang ZE des Zählers Z3 (Fig. 4, Zeile 3) über das UND-Verknüpfungsglied UD9 ein der logischen Eins entsprechendes Potential gelegt.

Ab dem Zeitpunkt t2 ist der Zähler Z3 auf Aufwärtszählen geschaltet, der Zählvorgang aber angehalten. Der Zähler Z2 ist dauernd auf Abwärtszählen geschaltet (Zählrichtungseingang ZR liegt auf einem der logischen Eins entsprechenden Potential) der Zählvorgang wird jedoch erst gestartet, wenn am Ladebefehlseingang LE des Zählers Z2 ein der logischen Eins entsprechendes Potential anliegt, obwohl der Zählbefehlseingang ZE des Zählers Z2 immer auf einem der logischen Null entsprechenden Potential liegt. Abwärtszählen des Zählers Z2 bedeutet, daß nach acht Taktimpulsen (die vom Taktausgang TA des Start Stop-Oszillators SO abgegeben werden) zu einem Zeitpunkt t3 am Ausgang A4 des Zählers Z2 ein der logischen Null entsprechendes Potential abgreifbar ist (dies entspricht der in Fig. 4, Zeile 6 dargestellten Zahl 7). Dies bedeutet, daß zum Zeitpunkt t3 an den Zählbefehlseingang ZE des Zählers Z3 (Fig. 4, Zeile 3) ein der logischen Null entsprechendes Potential gelegt wird, und dadurch der Zählvorgang des Zählers Z3 wieder gestartet wird.

Der Zählvorgang des Zählers Z3 ist nur sinnvoll bis zu einem maximalen Zeitpunkt t5, der durch die Anzahl der Ausgänge A1 bis A4 des Zählers Z3 gegeben ist. Der Meßzyklus wird erst dann wieder gestartet, wenn das Start-Stop-Signal SS (Fig. 4, Zeile 1) einen negativen Impuls aufweist.

In Fig. 4, Zeile 7 wurde angenommen, daß das Auswertesignal AW zu einem Zeitpunkt t4 ein der logischen Eins entsprechendes Potential annimmt. Dies bedeutet, daß die Feldaufbauzeit FZ des entsprechenden Impulses auf der Versorgungsleitung V11 (Fig. 3, Zeile 4) der Zeitdifferenz zwischen dem Zeitpunkt t4 und dem Zeitpunkt t0 entspricht. Durch diesen Wechsel des Auswertesignals AW wird vom invertierten Ausgang $\overline{Q}$ des D-Flip-Flops DF1 (s. den dazu inversen Ausgang Q des D-Flip-Flops DF1 in Fig. 3, Zeile 10), ein der logischen Null entsprechendes Potential an den Schalteingang SE des Registers RT gegeben.

Dies bedeutet, daß die vor dem Zeitpunkt t4 am Register RT anliegenden Daten von den Ausgängen A1 bis A4 des Zählers Z3 ab dem Zeitpunkt t4 im Register RT gespeichert sind, und an dessen Ausgängen abnehmbar sind. Wie in Fig. 4 dargestellt, ist zum Zeitpunkt t4 an den Ausgängen A1 bis A4 des Zählers Z3, und damit auch an den Ausgängen des Registers RT die binäre Zahl 5 abgreifbar.

An den einen Eingängen der invertierenden UND-Verknüpfungsglieder UD10 bis UD13 liegt ab dem Zeitpunkt t4 ein der logischen Eins entsprechendes Potential (vom Ausgang Q des D-Flip-Flops DF1, s. Fig. 3, Zeile 10). Dadurch werden die an den Ausgängen des Registers RT anliegenden Daten invertiert über die invertierenden UND-Verknüpfungsglieder UD10 bis UD13 als Meßwert MW an den Digitaleingang D des Sollwertgebers SG gegeben.

Vom Analogausgang AA des Sollwertgebers SG wird daraufhin, d. h. nach dem Zeitpunkt t4, ein analoger Spannungswert, d. h. die Referenzspannung UR an die Referenzeingänge RG der Konstantstromquellen KS1 und KS2 gegeben. Hierdurch wird bewirkt, daß in den Konstantstromquellen KS1 und KS2 entweder der gleiche, zum Zeitpunkt t0 eingestellte Strom eingestellt bleibt, oder daß ein höherer Strom eingestellt wird. Ein höherer Strom wird eingestellt, sowohl mit steigendem negativen Lastwinkel, d. h. die Feldaufbauzeit FZ verkürzt sich, als auch mit steigendem positiven Lastwinkel, d. h. die Feldaufbauzeit FZ verlängert sich. Eine Erhöhung des Motorstromes IW1 bzw. IW2 (Fig. 3, Zeilen 12 und 13) wird, ebenso wie die Konstanthaltung des Stromes, durch die weiteren Impulse auf den Versorgungsleitungen V11 bis V22 (Fig. 3, Zeilen 4 bis 7) bewirkt, die eine der Regelzeit RZ entsprechende Impulsbreite besitzen.

Wie vorher schon erwähnt, wird der nächste Meßzyklus gestartet, wenn das Start-Stop-Signal SS (Fig. 3, Zeile 9) einen negativen Impuls abgibt, bzw. der Schrittakt ST (Fig. 3, Zeile 1) eine abfallende Flanke aufweist. Von der Auswahlstufe AS werden nacheinander als Auswertesignal AW die Impulse auf den Versorgungsleitungen V11 bis V22 (Fig. 3, Zeilen 4 bis 7) zur Zeitmeßanordnung ZM durchgeschaltet, die eine der Feldaufbauzeit FE entsprechende Impulsbreite aufweisen.

Das erfindungsgemäße Verfahren ist nicht auf die Verwendung in der hier beschriebenen Schaltungsanordnung beschränkt. Bei entsprechender Anpassung (des Schrittmotorphasengebers SPG, sowie der Auswahlstufe AS) ist das Verfahren auch für mehrphasige Schrittmotoren anwendbar.

Bezugszeichenliste

| | |
|---|---|
| S | Steuerung |
| TG | Taktgeber |
| DG | Drehrichtungsgeber |
| ST | Schrittakt |
| DS | Drehrichtungssignal |
| SPG | Schrittmotorphasengeber |
| SP1, SP2 | · Schrittmotorphasen |
| KS1, KS2 | Konstantstromquellen |
| RG | Referenzeingang |
| V11, V12, V21, V22 | Versorgungsleitungen |
| SM | Schrittmotor |
| W1, W2 | Wicklungen (Wicklungssysteme) |
| AS | Auswahlstufe |
| A | Auswahlsignal |
| AW | Auswertesignal |
| ZM | Zeitmeßanordnung |
| SS | Start-Stop-Signal |
| MW | Meßwertsignal |
| SG | Sollwertgeber |
| D | Digitaleingang |
| AA | Analogausgang |
| UR | Referenzspannung |
| Z1, Z2, Z3 | Zähler |
| ZR | Zählrichtungseingang |
| ZE | Zählbefehlseingang |
| LE | Ladebefehlseingang |
| A1-A4 | Ausgänge |
| D1-D4, DE | Dateneingänge |
| RT | Register |
| SE | Schalteingang |
| I1, I2, I3 | Inverter |
| DF1, DF2 | D-Flip-Flops |
| RE | Rücksetzeingang |
| Q, $\bar{Q}$ | Ausgang, invertierter Ausgang |
| UD1-UD7, UD10-UD15 | invertierende UND-Verknüpfungsglieder |
| UD8, UD9 | UND-Verknüpfungsglieder |
| OD1, OD2 | ODER-Verknüpfungsglieder |
| OD3 | invertierendes ODER-Verknüpfungsglied |
| FZ | Feldaufbauzeit |
| RZ | Regelzeit |
| AZ | Auszeit |
| t0-t5 | Zeitpunkte |
| IW1, IW2 | Motorströme |
| R | Widerstand |
| C | Kondensator |

**Patentansprüche**

1. Verfahren zur Stromregelung eines Schrittmotors (SM), der mit einem hochfrequent schaltgeregelten Motorstrom (IW1, IW2) über Versorgungsleitungen (V11 bis V22) von Konstantstromquellen (KS1, KS2) ansteuerbar ist, dadurch gekennzeichnet, daß zu Beginn einer Kommutierungsphase (Zeitpunkt t0) eines Motorstromes (IW1, IW2) in den Konstantstromquellen (KS1, KS2) ein Strom mit dem kleinsten Wert eingestellt wird,

daß eine Feldaufbauzeit (FZ) gemessen wird, und daß durch die Feldaufbauzeit (FZ) der nächste lastwinkelabhängige Wert des Stromes bestimmt ist.

2. Verfahren nach Anspruch 1, dadurch gekennzeichnet, daß sowohl mit steigender als auch mit fallender Feldaufbauzeit (FZ) der nächste Wert des Stromes erhöht wird.

3. Schaltungsanordnung zur Durchführung des Verfahrens nach Anspruch 1, gekennzeichnet durch eine Auswahlstufe (AS), die nacheinander Impulse auf den Versorgungsleitungen (V11 bis V22) als Auswertesignal (AW) abgibt, durch eine Zeitmeßanordnung (ZM) die als Meßwertsignal (MW) eine der Feldaufbauzeit (FZ) entsprechende Zahl abgibt, und durch einen Sollwertgeber (SG), der aus dem Meßwertsignal (MW) eine analoge Referenzspannung (UR) bildet und damit den Strom einstellt.

4. Schaltungsanordnung nach Anspruch 3, dadurch gekennzeichnet, daß die Zeitmeßanordnung (ZM) eine Meßwertsignal (MW) abgibt, durch das sowohl mit steigender Feldaufbauzeit (FZ) als auch mit fallender Feldaufbauzeit (FZ) der Strom erhöht wird.

5. Schaltungsanordnung nach Anspruch 4, dadurch gekennzeichnet, daß ein Zähler (Z3) vorgesehen ist, der mit Beginn der Kommutierungsphase (Zeitpunkt t0) abwärts bis Null und nach einer Verweilzeit aufwärts zählt, wobei die der Feldaufbauzeit (FZ) entsprechende Zahl Null dem Wert Null des Lastwinkels entspricht.

## Claims

1. A method of regulating the current of a stepping motor (SM) driven by a high-frequency switch-regulated motor current (IW1, IW2) via supply lines (V11 to V22) from constant current sources (KS1, KS2), characterised in that at the beginning of a commutating phase (time t0) of motor current (IW1, IW2) a minimum value current is set in the constant current sources (KS1, KS2) ; that a field build-up time (FZ) is measured ; and that the next value of the current dependent on load-angle is determined by the field build-up time (FZ).

2. A method as claimed in Claim 1, characterised in that both with an increasing or a falling field build-up time (FZ) the next value of the current is increased.

3. A circuit arrangement for the implementation of the method claimed in Claim 1, characterised by a selection stage (AS) which consecutively emits pulses to the supply lines (V11 to V22) as analysis signals (AW) ; by a time-measuring arrangement (ZM) which emits a number corresponding to the field build-up time (FZ) as a measured value signal (MW) ; and by a theoretical value generator (SG) which forms an analogue reference voltage (UR) from the measured value signal (MW) and thus sets the current.

4. A circuit arrangement as claimed in Claim 3, characterised in that the time-measuring arrangement (ZM) emits a measured value signal (MW) by which the current is increased both in the event of an increasing field build-up time (FZ) and with a decreasing field build-up time (FZ).

5. A circuit arrangement as claimed in Claim 4, characterised in that a counter (Z3) is provided which counts downwards to zero from the start of the commutating phase (time t0), and following a period of dwell, counts upwards, whereby the number zero corresponding to the field build-up time (FZ) corresponds to the zero value of the load angle.

## Revendications

1. Procédé pour la régulation du courant d'un moteur pas à pas (SM) qui est commandé par un courant de moteur (IW1, IW2), réglé par commutation à haute fréquence et passant par des lignes d'alimentation (V11 à V22), depuis des sources de courant constant (KS1, KS2), caractérisé en ce que, au début d'une phase de commutation (instant t0) d'un courant de moteur (IW1, IW2), un courant de la plus petite valeur est ajusté dans les sources de courant constant (KS1, KS2), qu'un temps d'établissement du champ (FZ) est mesuré et que le temps d'établissement du champ (FZ) détermine la valeur suivante, dépendant de l'angle de charge, du courant.

2. Procédé selon la revendication 1, caractérisé en ce que la valeur suivante du courant est augmentée à la fois en cas d'allongement et en cas de raccourcissement du temps d'établissement du champ (FZ).

3. Montage pour la mise en œuvre du procédé selon la revendication 1, caractérisé par un étage de sélection (AS) qui délivre successivement des impulsions en tant que signal d'exploitation (AW) aux lignes d'alimentation (V11 à V22), par un dispositif chronométrique (ZM) qui délivre en tant que signal de valeur de mesure (MW) un nombre correspondant au temps d'établissement du champ (FZ), ainsi que par un générateur de valeur de consigne (SG) qui forme une tension de référence analogique (UR) à partir du signal de valeur de mesure (MW) et ajuste le courant au moyen de ce signal.

4. Montage selon la revendication 3, caractérisé en ce que le dispositif chronométrique (ZM) délivre un signal de valeur de mesure (MW) par lequel le courant est accru à la fois en cas d'allongement et en cas de raccourcissement du temps d'établissement du champ (FZ).

5. Montage selon la revendication 4, caractérisé en ce qu'il comprend un compteur (Z3) qui, au début de la phase de commutation (instant t0) effectue un décomptage jusqu'à Zéro puis, après un temps de repos, effectue un comptage progressif, le nombre Zéro pour le temps d'établissement du champ (FZ) correspondant à la valeur Zéro de l'angle de charge.

# FIG 1

FIG 2

FIG 3

| Zeile | | |
|---|---|---|
| 1 | ST | |
| 2 | SP1 | |
| 3 | SP2 | |
| 4 | V11 | |
| 5 | V12 | |
| 6 | V21 | |
| 7 | V22 | |
| 8 | AW | |
| 9 | SS | |
| 10 | Q(DF1) | |
| 11 | TA(SO) | |
| 12 | JW1 | |
| 13 | JW2 | |

0 140 161

# FIG 4

Zeile

1 SS
2 ZR (Z3)
3 ZE (Z3)
4 LE (Z2)
5 A1–A4(Z3)
6 A4 (Z2)
7 AW

$\overline{MW}=5$